# EUROPÄISCHE PATENTSCHRIFT

(11) **EP 1 981 683 B1**
(45) Veröffentlichungstag und Bekanntmachung des Hinweises auf die Patenterteilung: **01.12.2010**
(21) Anmeldenummer: 07702960.1
(22) Anmeldetag: 23.01.2007
(51) Int. Cl.: B23Q 17/22

(54) **VERFAHREN UND VORRICHTUNG ZUR PRÜFUNG VON EIGENSCHAFTEN EINES WERKZEUGELEMENTS**
METHOD AND DEVICE FOR TESTING PROPERTIES OF A TOOL ELEMENT
PROCÉDÉ ET DISPOSITIF POUR CONTRÔLER DES CARACTÉRISTIQUES D'UN ÉLÉMENT D'OUTIL

(30) Priorität: 25.01.2006 DE 102006003761
(43) Veröffentlichungstag der Anmeldung: 22.10.2008
(73) Patentinhaber: Robert Bosch GmbH, 70442 Stuttgart (DE)
(72) Erfinder: BARCIN, Buelent, 70499 Stuttgart (DE)
(86) Internationale Anmeldenummer: PCT/EP2007/000550
(87) Internationale Veröffentlichungsnummer: WO 2007/085419

(56) Entgegenhaltungen:
- EP-A- 0 903 198
- WO-A-98/57776
- WO-A-2004/094104
- DE-U1-202004 009 232
- GB-A- 2 319 615
- JP-A- 9 155 693
- JP-A- 60 099 548
- JP-A- 60 127 958
- JP-A- 61 164 767
- JP-A- 63 288 647

## Beschreibung

Die vorliegende Erfindung ist auf ein Verfahren zur Prüfung von Eigenschaften wenigstens eines Werkzeugelements gerichtet. Die Erfindung wird unter Bezugnahme auf Bohrer beschrieben, es wird jedoch darauf hingewiesen, dass die Erfindung auch auf andere Werkzeugelemente wie Meß- u. Einstellplätze, Fräs/-Drehmaschinen sowie Schraubelemente Schleifelemente und dergleichen Anwendung finden kann. Aus dem Stand der Technik sind Vorrichtungen und Verfahren bekannt, mittels derer Bohrerbrüche oder Verschleißerscheinungen an Bohrern erkannt werden können.

Bei den aus dem Stand der Technik bekannten Verfahren wird nach einer vorgegebenen Bohrzeit mittels einer Kamera die Spitze des Bohrers beobachtet, und geprüft, ob Verschleißerscheinungen aufgetreten sind. Ebenso wird über diese Kamera festgestellt ob ein Bohrerbruch aufgetreten ist. Bei diesem Verfahren ist es jedoch erforderlich nach einem Bohrprozess eine bestimmte Zeit zu warten, bis die Sicht zwischen der Kamera und dem Bohrelement wieder klar ist. Erst dann kann mit Hilfe der Kamera der Zustand des Bohrers überprüft werden. Auf diese Weise geht für die Überprüfung des Zustands der Bohrer Zeit verloren.

Die GB-A-2 319 615 zeigt ein Verfahren, bzw. eine Vorrichtung gemäß dem Oberbegriff des Anspruchs 1, bzw. des Anspruchs 8.

Der vorliegenden Erfindung liegt die Aufgabe zugrunde, ein Verfahren und eine Vorrichtung zur Verfügung zu stellen, welche eine Prüfung von Eigenschaften der Werkzeugelemente auch während des Betriebs derselben erlauben.

Dies wird erfindungsgemäß durch ein Verfahren nach Anspruch 1 und eine Vorrichtung nach Anspruch 8 erreicht. Vorteilhafte Ausführungsformen und Weiterbildungen sind Gegenstand der Unteransprüche.

Bei dem erfindungsgemäßen Verfahren wird das Werkzeugelement in Richtung eines Bezugskörpers oder der Bezugskörper in Richtung des feststehenden Werkzeuges bewegt. Dabei wird wenigstens einmal während der Bewegung des Werkzeugselements auf den Bezugskörper zu die örtliche Position des Werkzeugselements gegenüber dem Bezugskörper bestimmt. Schließlich wird ein erstes Signal ausgegeben, das für diejenige örtliche Position des Werkzeugelements charakteristisch ist, bei der das Werkzeugelement den Bezugskörper kontaktiert. Unter Kontaktieren wird sowohl die Herstellung eines elektrischen Kontakts als auch jegliches Berühren verstanden.

Bevorzugt wird das Werkzeugelement im Wesentlichen geradlinig auf den Bezugsköper zubewegt. Bei dem Bezugskörper handelt es sich um ein zu bearbeitendes oder zu messendes Werkstück. Unter der örtlichen Position des Werkzeugselements gegenüber dem Bezugskörper wird die örtliche Position insbesondere in der Bewegungsrichtung des Werkzeugselements verstanden, welche damit auch ein Maß für den Abstand zwischen dem Werkzeugelement bzw. dessen Spitze einerseits und dem Bezugskörper andrerseits ist.

Des weiteren wird neben dem ersten Signal auch ein zweites für das Werkzeugelement charakteristisches Signal ausgegeben. Unter einem für das Werkzeugelement charakteristischen Signal wird ein solches Signal verstanden welches das Ereignis des Auftreffens des Werkzeugelements auf den Bezugskörper signalisiert und sich bevorzugt von anderen Signalen, welche beispielsweise das Auftreffen von anderen Werkzeugelementen auf den Bezugskörper signalisieren, unterscheidet.

Das Signal kann direkt an den Benutzer ausgegeben werden. Es kann jedoch auch zusätzlich oder alternativ an eine Prozesseinrichtung gegeben und gegebenenfalls weiterverarbeitet werden.

Dieses für das Werkzeugelement charakteristische Signal wird gemeinsam mit dem ersten Signal, welches die örtliche Position des Werkzeugelements angibt, ausgeben.

Dies bedeutet, dass ein Wertepaar oder ein Signalpaar ausgegeben wird, welches anzeigt; in welcher örtlichen Position gegenüber dem Bezugskörper das Werkzeugelement den Bezugskörper kontaktiert hat. Sofern der Bohrer noch intakt ist, stimmt dieses Signalpaar mit einem Sollwert überein. Falls jedoch der Bohrer infolge der Benutzung bereits mehr oder weniger abgenutzt ist, wird das Signal, welches die Kontaktierung anzeigt später auftreten. Selbiges gilt auch im Falle eines Bohrerbruchs. Auch in diesem Falle wird das Kontaktereignis erst später als für den Fall eines intakten Bohrers angezeigt.

Das erfindungsgemäße Verfahren bietet den Vorteil, dass es auch während des Bearbeitens eines Werkstückes durchgeführt werden kann und für die Überprüfung der Eigenschaften nicht die Beendigung des Bohrvorgangs abgewartet zu werden braucht.

Auch können mit dem erfindungsgemäßen Verfahren sowohl Bohrerlängenmessungen als auch Bohrerlängenveränderungsmessungen an den Werkzeugelementen vorgenommen werden.

Weiterhin ist es auch möglich, mit dem erfindungsgemäßen Verfahren zu überprüfen, ob der eingewechselte Bohrer (Messspitze, Gewindebohrer, Senker, Drehmeisel, Fräser...) oder allgemein das eingewechselte Werkzeugelement (oder Werkstück bei feststehender Zerspanneinheit) das richtige ist, da dieses eine bestimmte Länge aufweisen muss.

Das erfindungsgemäße Verfahren kann auch über längere Zeiten hin angewandt werden, und auf diese Weise ein Abnutzungsprofil des Bohrers über die Zeit mit vergleichsweise einfachen Mitteln erstellt werden.

Da die Messung auch während der Bearbeitung eines Werkstückes durchgeführt werden kann, geht keine wertvolle Zerspannzeit verloren.

Des weiteren ist der Bezugskörper ein zu bearbeitendes Werkstück. In diesem Fall kann die Prüfung der Werkzeugelemente im Wesentlichen zeitgleich mit der Bearbeitung des Werkstückes erfolgen.

Das charakteristische Signal ist ein Spannungswert. Dabei wird ein Werkzeugelement mit einer vorbestimmten Spannung gegenüber dem Bezugskörper beaufschlagt. Sobald das Werkzeugelement den Bezugskörper kontaktiert, wird ein Stromkreis geschlossen und der entsprechende Spannungswert angezeigt.

Bevorzugt sind die zu prüfenden Eigenschaften aus einer Gruppe von Eigenschaften ausgewählt, die die Länge des Werkzeugelements, das Vorhandensein von Brüchen oder verschleißbedingten Verkürzungen und dergleichen enthält. Daneben kann auch festgestellt werden, ob bei einem Bohrkopf das richtige Werkzeugelement eingesetzt ist.

Des weiteren ist eine Vielzahl von Werkzeugelementen vorgesehen, die bevorzugt auf einem Bohrkopf angeordnet ist. Dabei wird jedes Werkzeugelement mit einer vorgegebenen Spannung gegenüber dem Bezugskörper beaufschlagt. Sobald eines der Werkzeugelemente den Bezugskörper kontaktiert, kann dies dem Benutzer durch das Auftreten einer entsprechenden charakteristischen Spannung angezeigt werden. Anstelle einer Spannung könnten jedoch auch andere elektrische Größen ausgegeben werden, wie beispielsweise Stromwerte, Widerstandswerte, Ladungswerte und dergleichen.

Ein erstes Signal wird ausgegeben, welches für die örtliche Position, an der ein bestimmtes Werkzeugelement den Bezugskörper kontaktiert, charakteristisch ist. Daneben wird ein zweites Signal ausgegeben, das für das bestimmte Werkzeugelement charakteristisch ist. Auf diese Weise werden für jedes einzelne Werkzeugelement die entsprechenden charakteristischen Signale ausgegeben. So kann der Benutzer für jedes einzelne Werkzeugelement prüfen, ob dieses gebrochen oder abgenutzt ist.

Vorzugsweise wird in Abhängigkeit von dem ersten Signal eine Anweisung ausgegeben. Dabei kann die Werkzeugmaschine durch die ausgegeben Werte bzw. den Zusammenhang zwischen der örtlichen Position und dem Auftreten des Kontakts feststellen, ob das entsprechende Bohrelement (Messspitze, Gewindebohrer, Senker, Drehmeisel, Fräser...) ausgewechselt werden muss. Auch kann festgestellt werden, ob der richtige Bohrer (Messspitze, Gewindebohrer, Senker, Drehmeisel, Fräser...) bzw. ein Bohrer (Messspitze, Gewindebohrer, Senker, Drehmeisel, Fräser...) mit der richtigen Länge eingesetzt ist.

So kann beispielsweise infolge eines Entscheidungsprozesses oder infolge der Anweisung die Maschine angehalten und der Benutzer aufgefordert werden, ein neues Werkzeugelement einzusetzen. Auch kann mittels einer Vielzahl von Messungen über die Zeit einem Benutzer ein Maß für den aktuellen Zustand des Werkzeugelements ausgegeben werden. Bei der Anweisung kann es sich um eine an den Benutzer ausgegebene Anweisung handeln oder um eine Anweisung, die innerhalb der Werkzeugmaschine weiterverarbeitet wird.

Um die Entscheidungsbildung zu erleichtern, ist es ferner denkbar, die gemessen Werte mit einer gewissen Toleranz zu beaufschlagen. Auf diese Weise kann dem Umstand Rechnung getragen werden, dass nicht alle Bezugskörper wie z. B. Gussteile absolut gleich sind. Diese Toleranzangabe bringt jedoch eine gewisse Einschränkung der Verschleißkontrolle mit sich, da auch die Ermittlung der Kontaktpositionen mit der Toleranz beaufschlagt ist.

Auch kann mit dem erfindungsgemäßen Verfahren relativ einfach ein Verschleißverlauf für unterschiedliche Werkzeugelemente aufgenommen werden. Dabei können Bohrerbruchhistorien für einen bestimmten Werkzeugtyp bzw. für ein bestimmtes Werkzeugelement aufgenommen werden. Weiterhin kann durch das erfindungsgemäße Verfahren über die zeitliche Aufnahme von Verschleißverläufen der jeweils für ein bestimmtes Werkzeug am besten geeignete Bohrertyp ausfindig gemacht werden. Führt beispielsweise eine Verschleißuntersuchung für einen ersten Bohrertyp und ein bestimmtes Werkstück zu einer Stand- bzw. Betriebszeit von 5 Stunden und bei einem zweiten Bohrertyp zu einer Stand- bzw. Betriebszeit von 9 Stunden, so kann als Ergebnis festgehalten werden, dass für dieses bestimmte Werkstück der Bohrertyp 2 besser geeignet ist.

Zeitliche Aufnahmen des Verschleißes der Werkzeugelemente könnten auch zur Anpassung anderer Parameter der Werkzeugeinrichtung eingesetzt werden wie beispielsweise zur Drehzahlsteuerung, zur Steuerung des Zu - Bewegens des Werkzeugselements auf den Bezugskörper usw.

Die Erfindung ist weiterhin auf eine Vorrichtung zur Prüfung von Eigenschaften eines Werkzeugelements gerichtet. Diese Vorrichtung weist eine Halterung auf, an der das Werkzeugelement angeordnet ist. Weiterhin ist eine Positionsmesseinrichtung vorgesehen, die die Position der Halterung gegenüber einem Bezugskörper in wenigstens einer Dimension, bevorzugt in der Bewegungsrichtung des Werkzeugelements gegenüber Bezugskörper bestimmt. Weiterhin ist eine Kontakterfassungseinrichtung vorgesehen, die das Auftreten eines Kontakts zwischen dem Werkzeugelement und dem Bezugskörper erfasst. Zudem ist eine Ausgabeeinrichtung vorhanden, die wenigstens die Position ausgibt an der der Kontakt zwischen dem Werkzeugelement und dem Bezugskörper auftritt.

Bevorzugt gibt die Ausgabeeinrichtung neben der Position an der der Kontakt zwischen dem Werkzeugelement und dem Bezugskörper auftritt auch ein Signal aus, welches für das Werkzeugelement charakteristisch ist. Auf diese Weise können mehrere Werkzeugelemente voneinander unterschieden werden.

Bevorzugt weist die Kontakterfassungseinrichtung eine Spannungsquelle auf, die derart mit dem Werkzeugelement verbunden ist, dass bei Auftreten eines Kontakts zwischen dem Werkzeugelement und dem Bezugskörper ein Stromkreis geschlossen wird. Durch das Schließen des Stromkreises kann ein bevorzugt für das Werkzeugelement charakteristischer Spannungswert ausgegeben bzw. dem Benutzer angezeigt werden.

In einer weiteren bevorzugten Ausführungsform weist die Kontakterfassungseinrichtung ein Schaltelement auf, das bei Auftreten eines Kontakts zwischen dem Werkzeugelement und dem Bezugskörper von einem Schaltzustand in einen anderen Schaltzustand übergeht. Durch diesen Wechsel der Schaltzustände kann das Auftreten eines Kontakts zwischen dem Werkzeugelement und dem Bezugskörper festgestellt werden.

Bevorzugt weist die Kontakterfassungseinrichtung eine Vorspanneinrichtung auf. Dabei kann es sich insbesondere aber nicht ausschließlich um eine Feder (Dehmmessstreifen oder Piezoelement) handeln, die bei Auftreten eines Kontakts zwischen dem Werkzeugelement und dem Bezugskörper gepresst wird und wiederum das Schaltelement betätigt. Damit kann die Feder dazu dienen, daß das Werkzeugelement nach dem Kontaktieren des Werkzeugs wieder in eine Ausgangsposition zurückzubringen und damit den Schaltkontakt bevorzugt auch wieder in die Ausgangsstellung zu überführen.

Vorzugsweise ist an der Halterung eine Vielzahl von Werkzeugelementen angeordnet und bevorzugt erfasst die Kontakterfassungseinrichtung den Kontakt jedes Werkzeugelements mit dem Bezugskörper. Damit kann festgestellt werden, welches Werkzeugelement zu welchem Zeitpunkt bzw. bei welcher Position den Bezugskörper berührt. Auf diese Weise können, wie oben angegeben, Eigenschaften des Werkzeugelements wie insbesondere, aber nicht ausschließlich ein Bruch des Werkzeugelement oder ein Verschleiß infolge Abnutzung desselben festgestellt werden. Bevorzugt ist auf der Halterung eine Vielzahl von Werkzeugelementen angeordnet, die jeweils in das zu bearbeitende Werkstück eingeführt werden können.

Die oben erwähnten Schaltelemente eigen sich insbesondere für solche Bezugskörper bzw. Werkstücke, die selbst keine stromleitenden Eigenschaften aufweisen. Bei diesen Bezugskörpem kann durch das Kontaktieren des Werkzeugelements mit dem Bezugskörper nicht direkt ein Stromkreis geschlossen werden, sodass in diesem Falle auf das Schaltelement zurückzugreifen ist. Es wäre jedoch auch möglich, einen nicht-leitenden Bezugskörper mit einer Kontaktschicht zu versehen, um auf diese Weise auch nach dem oben beschriebenen elektrischen Prinzip zu arbeiten.

Auch könnten die beiden oben beschriebenen Möglichkeiten nämlich einerseits das Beaufschlagen des Werkzeugelements mit einer Spannung und andererseits das Vorsehen eines Schaltelementes kombiniert werden. Auf diese Weise kann eine bestimmte Vorrichtung für unterschiedlichste Werkstücke einsatzfähig gemacht werden. Auch können durch doppelte Messung mit den beiden dargestellten Verfahren Plausibilitätskontrollen durchgeführt oder die Genauigkeit der Messungen erhöht werden.

In einer weiteren bevorzugten Ausführungsform ist der Bezugskörper elektrisch isoliert. Auf diese Weise kann erreicht werden, dass die exakt vorgegebene Spannung bei einem Kontakt gemessen wird. Auch kann das Auftreten von Kurzschlüssen verhindert werden.

Weitere Vorteile und Ausführungsformen der vorliegenden Erfindung ergeben sich aus den beigefügten Zeichnungen. Darin zeigen:
- Figur 1: eine erfindungsgemäße Vorrichtung zum Prüfen von Eigenschaften;
- Figur 2: die Vorrichtung aus Figur 1, wobei unterschiedliche Varianten der Kon- takterfassung dargestellt werden;
- Figur 3: die Vorrichtung aus Figur 1 mit einer Anzeigeeinrichtung;
- Figur 4: die Vorrichtung aus Figur 1, wobei die Halterung in einer zweiten Positi- on gegenüber dem Bezugskörper angeordnet ist;
- Figur 5: die Vorrichtung aus Figur 1, wobei die Halterung in einer dritten Positi- on gegenüber dem Bezugskörper angeordnet ist;
- Figur 6: die Vorrichtung aus Figur 1, wobei die Halterung in einer vierten Positi- on gegenüber dem Bezugskörper angeordnet ist;
- Figur 7: die Vorrichtung aus Figur 1, wobei die Halterung in einer fünften Positi- on gegenüber dem Bezugskörper angeordnet ist;
- Figur 8: eine erfindungsgemäße Vorrichtung mit einer weiteren Kontakterfas- sungseinrichtung;
- Figur 9: ein Beispiel für von der erfindungsgemäßen Vorrichtung ausgegebene Werte; und
- Figur 10: ein weiteres Beispiel für von der erfindungsgemäßen Vorrichtung aus- gegebene Werte.

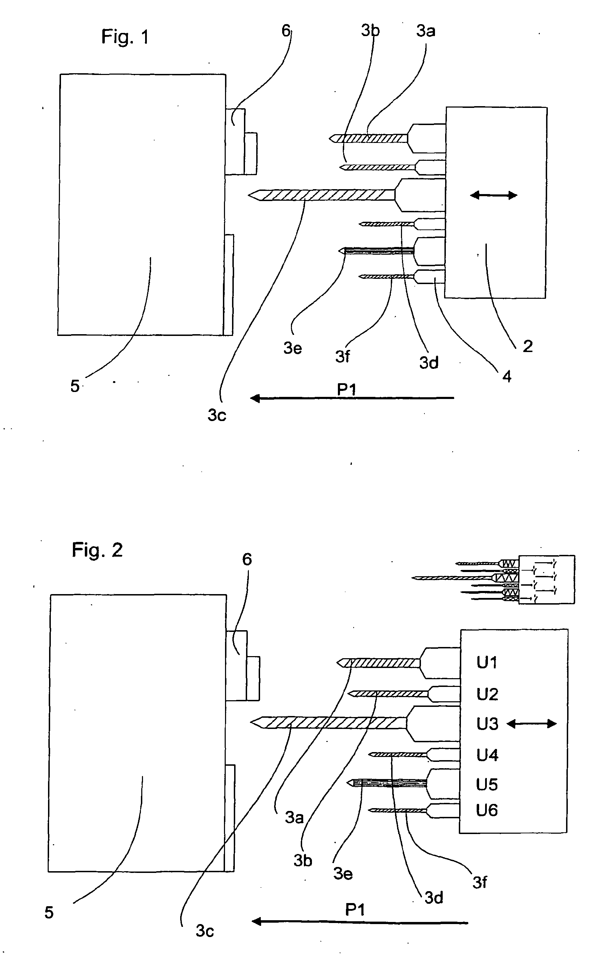

Figur 1 zeigt eine Vielzahl von Werkzeugelementen 3a, 3b, 3c, 3d, 3e und 3f, die mittels Halteelementen 4 an einer gemeinsamen Halterung 2 befestigt sind. Bei der hier gezeigten Ausführungsform handelt es sich bei den Werkzeugelementen 3a bis 3d sowie 3f um Bohrer und bei dem Werkzeugelement 3e um eine Reibahle. Es wäre jedoch möglich, anstelle der hier gezeigten Werkzeugelemente andere Werkzeugelemente wie (Messspitze, Gewindebohrer, Senker, Drehmeisel, Fräser...) Schraubelemente, Feilelemente und dergleichen einzusetzen.

Die einzelnen Werkzeugelemente werden gegenüber der Halterung 2 gedreht.

Die Halterung 2 wird entlang des Pfeils P1 auf einen Bezugskörper 5 zu bewegt. Bei diesem Bezugskörper handelt es sich, wie oben ausgeführt, bevorzugt gleichzeitig um das zu bearbeitende Werkstück, wie beispielsweise einen Block aus Gusseisen. Auf dem Bezugskörper können Vorsprünge 6 vorhanden sein, die entsprechend bei der Ermittlung der Position der Halterung gegenüber dem Bezugskörper mit zu berücksichtigen sind. Auch wäre eine Krümmung der den Werkzeugelementen zugewandten Oberfläche des Bezugskörpers zu berücksichtigen.

Mittels einer (nicht gezeigten) Positionserfassungseinrichtung wird die Position der Halterung 2 gegenüber dem Bezugskörper 5 und damit auch die Position der einzelnen Werkzeugelemente 3a bis 3f gegenüber dem Bezugskörper 5 bestimmt.

Die einzelnen Werkzeugelemente 3a bis 3f sind in Richtung des Pfeils P1 im Wesentlichen fest gegenüber der Halterung 2 angeordnet. Unter im Wesentlichen wird verstanden, dass gleichwohl Vorspannelemente vorgesehen sein können, die eine geringfügige Bewegung der jeweiligen Werkzeugelemente gegenüber der Halterung 2 ermöglichen oder der Berührungsdruck auf kontakterzeugende Elemente wie bzw. Dehmmessstreifen sowie Piezoelemente geführt sein können.

Bei der in Figur 1 gezeigten Vorrichtung weisen die einzelnen Werkzeugelemente unterschiedliche Längen auf und die Spitzen einiger der Werkzeugelemente sind damit entlang des Pfeils P1 in jeweils unterschiedlicher Lage angeordnet. Dagegen ragen die Reibahle 3e und das Bohrelement 3b im Wesentlichen gleich weit von der Halterung 2 in Richtung des Bezugskörpers 5. Das bedeutet, dass im Falle eines ebenen Bezugskörpers die Kontakte der beiden Werkzeugelemente im Wesentlichen gleichzeitig bzw. an der gleichen Position gegenüber der Halterung gegenüber dem Bezugskörper 5 auftreten würden. In einem solchen Fall könnte der Kontakt nicht über einen Spannungsimpuls angezeigt werden. Dies wird unten genauer erläutert.

Figur 2 zeigt die Vorrichtung aus Figur 1 in einer ersten Ausführungsform. Dabei werden die einzelnen Werkzeugelemente 3a bis 3f mit verschiedenen Spannungen U1, U2...U6 gegenüber dem Bezugskörper 5 beaufschlagt. Bevorzugt werden der Bezugskörper bzw. das Werkstück und die Werkzeugelemente elektrisch gegeneinander isoliert, das Werkstück mit einer Erdung versehen und die Werkzeuge mit den angegebenen Spannungen U1, U2...U6 beaufschlagt. Sobald ein Werkzeugelement beispielsweise das Werkzeugelement 3c den Bezugskörper 5 kontaktiert fließt zwischen dem Werkzeugelement und dem Bezugskörper ein Strom. Dieser Strom zeigt dem Benutzer oder der Maschinensteuerung an, dass das Werkzeugelement 3c den Bezugskörper kontaktiert hat.

Wie oben erwähnt, werden im Falle eines ebenen Bezugskörpers die Werkzeugelemente 3b und 3e diesen im Wesentlichen gleichzeitig berühren. Im Falle von zwei intakten Werkzeugelementen würden damit die Spannungen U2 und U5 im Wesentlichen gleichzeitig auftreten. Sofern eines der beiden Werkzeugelemente 3b oder 3e gebrochen oder abgenutzt ist, würde jeweils nur die andere Spannung auftreten. Sofern in dieser Ausführungsform unterschiedliche Spannungen U2 und U5 gewählt werden, kann anhand des angezeigten Spannungswertes festgestellt werden, welches der beiden Werkzeugelemente intakt ist und damit, welches der Werkzeugelemente abgenutzt ist.

Die einzelnen Werkzeugelemente können an den Halteelementen 4 nicht nur in vertikaler Richtung auf unterschiedlicher Position angeordnet sein, sondern auch in einer hierzu senkrechten in die Figurebene hineinragenden Richtung. Auf diese Weise können mit den hier gezeigten 6 Werkzeugelementen im Wesentlichen beliebige Bohrungsmuster in den Bezugskörper 5 eingebracht werden. Die kleine Teilfigur in Figur 2 veranschaulicht eine weitere Ausführungsform, bei der anstelle der Beaufschlagung mit Spannungen die einzelnen Werkzeugelemente mit Schalteinrichtungen verbunden sind. Dies wird unten eingehender erläutert.

Pfeil P1 kennzeichnet die Vorschubrichtung der Halterung 2 gegenüber dem Bezugskörper 5. Wie eingangs erwähnt, wird auch die jeweilige Position, an der ein Kontakt des Werkzeugelements mit dem Bezugskörper auftritt, festgehalten.

Es wäre jedoch auch möglich, dem Benutzer den Kontakt der Werkzeugelemente durch optische Mittel, wie beispielsweise Leuchtdioden oder dergleichen, anzuzeigen.

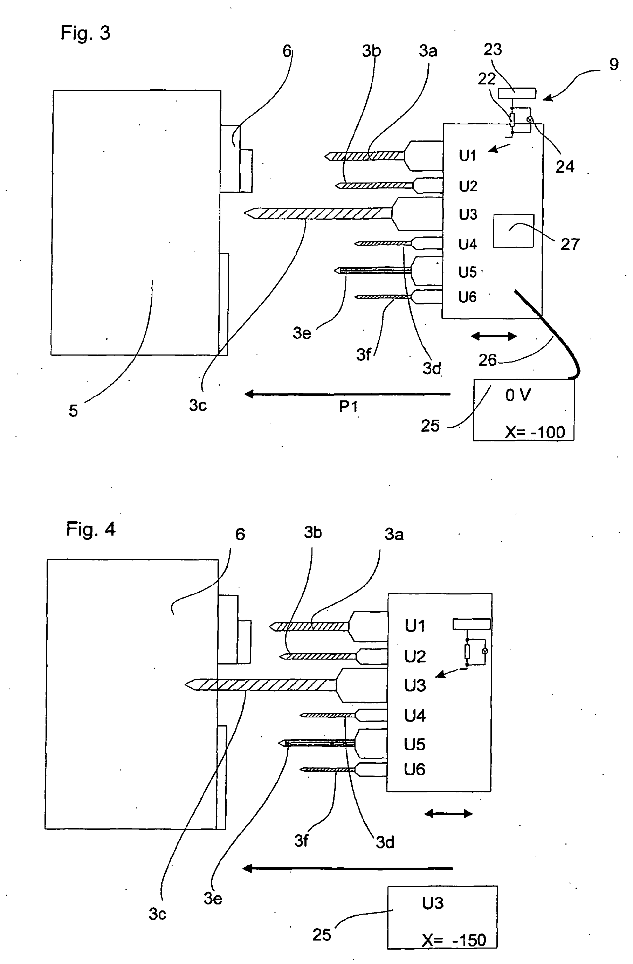

Figur 3 zeigt die erfindungsgemäße Vorrichtung zur weiteren Veranschaulichung. Dabei bezieht sich das Bezugszeichen 9 auf eine Spannungsmesseinrichtung, die wahlweise die an den einzelnen Werkzeugelementen 3a bis 3f anliegenden Spannungen U1 bis U6 abgreifen kann. Diese Spannungsmesseinrichtung weist ein Spannungsmesselement 24 sowie in dieser Ausführungsform einen Widerstand 22, an dem die Spannungen abfallen, auf. Die von einer Spannungsquelle 23 gelieferte Spannung wird gegenüber der Erdung, die wie oben ausgeführt, bevorzugt mit dem Bezugskörper verbunden ist, gemessen.

Bei der in Figur 3 gezeigten Situation kontaktiert noch kein Werkzeugelement 3a bis 3f den Bezugskörper 5, daher werden in diesem Falle über eine Anzeigeeinrichtung 25 noch keine Spannungswerte angezeigt und damit eine Spannung von 0 V ausgegeben. Das Bezugszeichen 26 bezieht sich auf eine elektrische Leitung, welche die Halterung und die Anzeigeeinrichtung miteinander verbindet. Das Bezugszeichen 27 kennzeichnet eine Positionserfassungseinrichtung. Die Angabe X = 100 bezieht sich auf die Position der Halterung 2 entlang des Pfeils P1 bezüglich einer Ruhestellung die im Fall von Figur 3 100 Längeneinheiten wie beispielsweise 100 mm weiter rechts tage.

Bei der in Figur 4 gezeigten Situation wurde die Halterung um weitere 50 mm nach links verschoben, was auf der Anzeigeeinrichtung 25 durch die Angabe x = -150 verdeutlicht wird. In dieser Situation ist das Werkzeugelement 3c bereits in den Bezugskörper 5 eingedrungen und dementsprechend wird auf der Anzeigeneinrichtung die Spannung U3 ausgegeben. Die Spannung U3 fällt in dem Moment an, in dem das Werkzeugelement 3c den Bezugskörper 5 kontaktiert. Mit diesen beiden Angaben kann daher festgestellt werden, ob das Werkzeugelement den Bezugskörper in dem theoretisch zu erwartenden Moment bzw. in der theoretisch zu erwartenden Position berührt. Dies ist dann der Fall, wenn dass Werkzeugelement noch intakt ist. Wenn das Werkzeugelement abgenutzt oder gebrochen ist, würde ein Kontakt gar nicht oder in jedem Fall später erfolgen und dies wäre umgekehrt ein Indiz für eine Zerstörung oder Abnutzung des Werkzeugelements.

Die Geschwindigkeit, mit der die Halterung 2 auf den Bezugskörper zu bewegt wird, liegt bevorzugt im Bereich von 2 m/sec . Diese Geschwindigkeit wird erst gedrosselt, sobald das erste Werkzeugelement den Bezugskörper berührt. (Fahren im Eilgang sowie im Vorschubbetrieb).

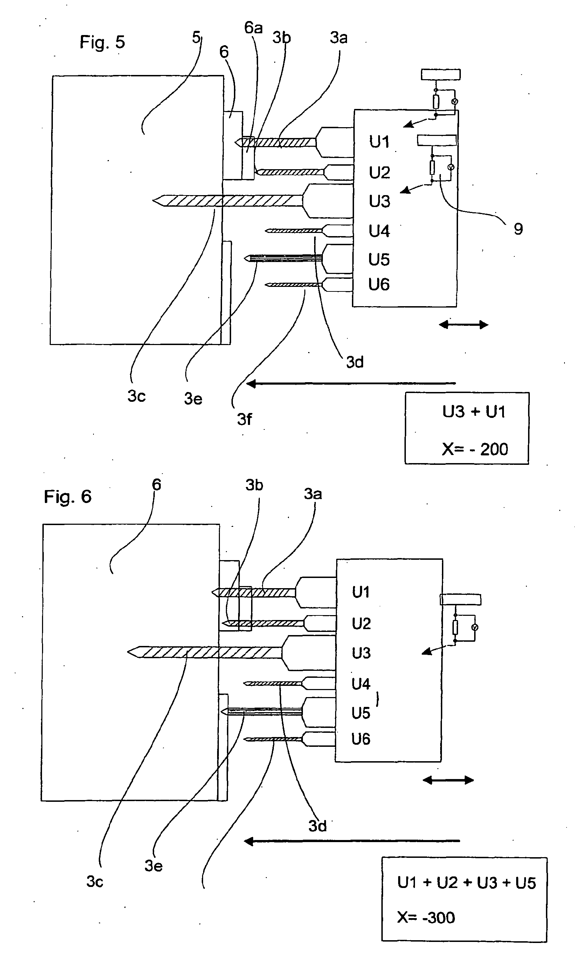

Bei der in Figur 5 gezeigten Situation wurde die Halterung um weitere 50 mm auf den Bezugskörper zubewegt. In dieser Situation haben die Werkzeugelemente 3a und 3c den Bezugskörper 5 kontaktiert bzw. sind in diesen eingedrungen. Damit wird an der Anzeigeeinrichtung eine Spannung angezeigt, die sich aus der Summe der Spannungen U1 und U3 ergibt. Es wäre jedoch auch möglich, separat die beiden Spannungen U1 und U3 anzuzeigen.

Bedingt durch die Vorsprünge 6 und 6a des Bezugskörpers 5 berühren die Werkzeugelemente diesen früher als dies der Fall wäre, wären diese Vorsprünge nicht vorhanden. Damit muss bei der Ermittlung des Ortes, an dem das Werkzeugelement den Bezugskörper kontaktiert die Breite der Vorsprünge 6 und 6a berücksichtigt werden.

Bei der in Figur 6 gezeigten Situation sind die Werkzeugelemente 3a, 3b 3c und 3e in den Bezugskörper eingedrungen, sodass dementsprechend auf der Anzeigeeinrichtung neben der Positionsangabe X= -300 der Spannungswert U1+U2+U3+U5 angezeigt wird. Aufgrund der Vorsprünge 6a und 6b kontaktiert das Werkzeugelement 3b den Bezugskörper früher als das Werkzeugelement bei 3e. Im Falle eines ebenen Bezugskörpers würden die beiden Werkzeugelemente 3b und 3e den Bezugskörper im Wesentlichen gleichzeitig berühren. Eine Unterscheidung, welches der beiden Bezugselemente den Bezugskörper früher kontaktiert, wäre damit nicht über eine Impulszählung möglich, da diese Impulse im Wesentlichen gleichzeitig erfolgen. Daher werden die Spannungswerte U2 und U5 unterschiedlich gewählt, sodass, falls, nur eine der beiden Spannungen angezeigt wird, rückgechlossen werden kann, welches Werkzeugelement (nämlich das andere) abgenutzt ist.

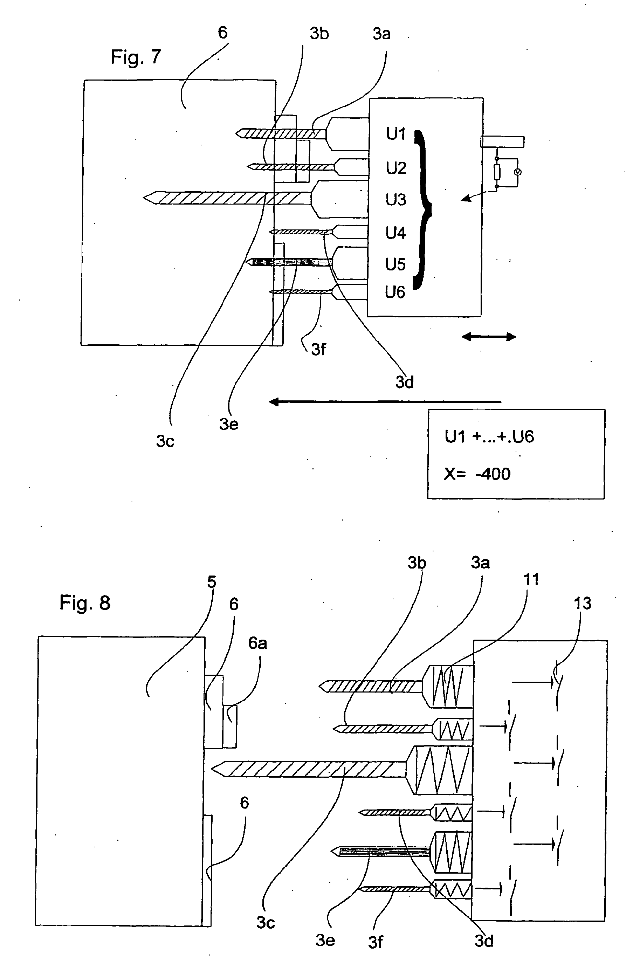

Bei der in Figur 7 gezeigten Situation sind sämtliche Werkzeugelemente in den Bezugskörper 6 eingedrungen und haben diesen damit kontaktiert. Falls sämtliche Werkzeugelemente intakt sind und insbesondere keines gebrochen, wird hier als Spannungswert die Summe aus allen Spannungen U1 bis U6 angezeigt. Gleichzeitig wird über die Lage x= -400 die Position der Halterung gegenüber des Bezugskörpers angegeben. Falls die angezeigte Spannung nicht der Gesamtspannung aus den Spannungen U1 bis U6 entspricht, kann aufgrund der fehlenden Spannung, zumindest, wenn wie in der bevorzugten Ausführungsform die Spannungen U1 bis U6 unterschiedlich gewählt werden, festgestellt werde, welches Werkzeugelement gebrochen ist.

Mittels einer entsprechenden Programmiersteuerung kann geprüft werden, ob die angezeigte Spannung der Summe aus den einzelnen Spannungen U1 bis U6 entspricht. Ist dies der Fall, kann über eine Maschinensteuerung an die Maschine die Anweisung gegeben werden, das Werkstück bzw. den Bezugskörper 5 weiter zu bearbeiten. Falls die angezeigte Spannung nicht den aufsummierten Spannungswerten der einzelnen Spannungen entspricht, kann ein Arbeitsvorgang abgebrochen und dem Benutzer angezeigt werden, dass eines der Werkzeugelemente nicht intakt ist. Bevorzugt wird dabei dem Benutzer auch angezeigt, welches Werkzeug ausgewechselt werden muss.

In Figur 8 wird eine weitere Ausführungsform der erfindungsgemäßen Vorrichtung dargestellt. Bei dieser Ausführungsform werden keine Stromkreise geschlossen und Spannungen abgegriffen, sondern die einzelnen Werkzeugelemente sind mit Schaltelementen 13 verbunden. Sobald ein Werkzeugelement den Bezugskörper 5 kontaktiert, wird die entsprechende Schalteinrichtung 13 umgeschaltet beispielsweise von einem geöffneten Zustand in einen geschlossen Zustand oder umgekehrt.

Durch dieses Schalten wird ein Signal erzeugt, welches dem Benutzer wiederum anzeigt, dass das Werkzeugelement den Bezugskörper kontaktiert hat. Bevorzugt sind Vorspanneinrichtungen 11 vorgesehen, mit denen die einzelnen Werkzeugelemente 3a bis 3e vorbelastet werden. Diese Vorspanneinrichtungen (z. B. Federn) bewirken, dass, wenn die Halterung 2 wieder von dem Bezugskörper entfernt wird, die einzelnen Werkzeugelemente wieder in eine Ruhestellung zurückgelangen und damit das Schaltelement 13 wieder in den ursprünglichen Schaltzustand zurückgeführt wird.

Die hier gezeigte Ausführungsform ist insbesondere für solche Fälle geeignet, in denen der Bezugskörper 5 nicht elektrisch leitend ist und daher im Falle eines Kontakts keine Stromkreise geschlossen werden können. Auch eignet sich die vorgeschlagene Variante mit dem Schaltelement 13 in dem Fall, in dem zumindest die Vorsprünge 6 bzw. 6a elektrisch nicht leitend sind.

Anstelle von der Ausgabe von Spannungswerten kann auch jeder Bohrer mit einer Identifikationsnummer versehen werden, die im Falle eines Berührungskontaktes mit dem Bezugskörper 5 ausgegeben wird. Anhand dieser Identifikationsnummer bzw. Bittnummer kann dem Benutzer angezeigt werden, welches Werkzeugelement an welcher Position X den Bezugskörper 5 kontaktiert hat.

Auch bei dieser Ausführungsform kann dem Benutzer angezeigt werden, dass einzelne Bohrer gegebenenfalls nicht intakt sind, falls die entsprechenden Identifikationscodes nicht oder nicht zum erwarteten Zeitpunkt gesendet wurden.

Anstelle der Federelemente könnten Werkzeugelemente auch mit Dehnmessstreifen versehen werden, d. h. Elementen, deren Widerstand sich mit der Dehnung ändert. Über die Ermittlung einer Widerstandsänderung kann ebenfalls das Kontaktieren des Werkzeugelements mit dem Bezugskörper 5 angezeigt werden.

Auch könnten die einzelnen Verfahren d. h. die Bestückung mit Federelementen und Dehnmessstreifen miteinander kombiniert werden. Auch ist es möglich, die oben beschriebene Messung über Spannungswerte mit den hier dargestellten Federelementen oder Dehnmessstreifen zu kombinieren, um auf diese Weise die Vorrichtung kompatibel für Bezugskörper aus beliebigen Materialien zu gestalten oder um mehrere Messungen parallel zueinander durchzuführen.

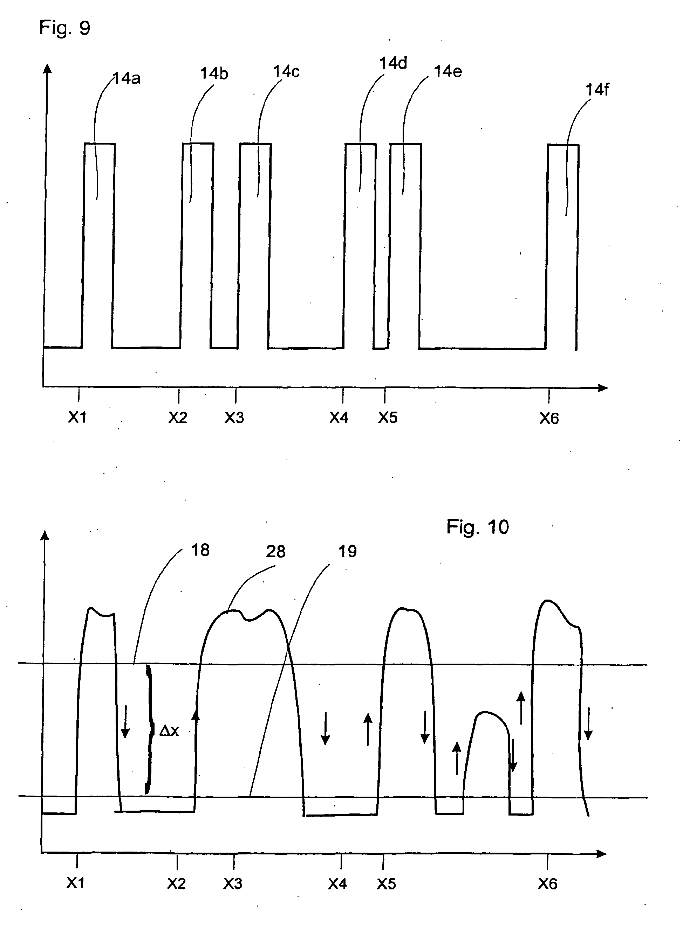

Figur 9 zeigt eine Darstellung, mit der das Kontaktereignis zwischen den Werkzeugelement 3a bis 3f und dem Bezugskörper 5 durch Spannungspulse 14a bis 14f angezeigt wird. Dabei korrespondiert der Spannungspuls 14a beispielsweise zu dem Werkzeugelement 3c oder genauer gesagt dem Ort, an dem das Werkzeugelement 3c den Bezugskörper 5 kontaktiert. Entsprechend korrespondiert der Spannungspuls 14b mit dem Werkzeugelement 3a, der Spannungspuls 14c mit dem Werkzeugelement 3b, der Spannungspuls 14d mit dem Werkzeugelement 3e, der Spannungspuls 14e mit dem Werkzeugelement 3f und der Spannungspuls 14f mit dem Werkzeugelement 3d.

Die Spannungspulse 14d und 14e liegen in sehr naher zeitlicher Abfolge, was dadurch bedingt ist, dass die entsprechenden Werkzeugelemente in kurzem zeitlichem bzw. örtlichem Abstand zueinander den Bezugskörper kontaktieren. Falls sämtliche Werkzeugelemente intakt sind, stimmt die Anzahl der Bohrer mit der Anzahl der in Figur 9 gezeigten Spannungsimpulse überein.

Diese bloße Zählung der Eingangspulse setzt jedoch voraus, dass alle Werkzeugelemente im Wesentlichen zeitversetzt den Bezugskörper kontaktieren. Auf der X-Achse sind, wie oben erwähnt, die jeweiligen zeitlichen Positionen, an denen die Werkzeugelemente den Bezugskörper kontaktieren, aufgezeichnet. Damit kann durch die Position und die jeweilige Kontaktmeldung eine Werkzeugvermessung durchgeführt werden. Die in Figur 9 dargestellte Methode kann auch als Kontrolle zur Prüfung verwendet werden, ob das jeweils richtige Werkzeugelement eingewechselt wurde, indem eine Plausibilitätskontrolle durchgeführt wird, um zu prüfen, ob das Bezugselement im zum richtigen örtlichen und zeitlichen Punkt den Bezugskörper kontaktiert.

Weiterhin kann mit den einzelnen Kontaktmeldungen ein Profil der gesamten Werkzeugeinrichtung, welche die Werkzeugelemente trägt, aufgenommen werden, beispielsweise festgestellt werden, dass das Werkzeugelement 3c länger ist als das Werkzeugelement 3a. Auch können die jeweiligen Positionswerte X bei der Durchführung einer Messung abgespeichert und das gespeicherte Profil bei der nächsten Überprüfung der Bohrerzustände verwertet werden. Durch Abgleich neu gemessener Koordinaten für neue Bohrer kann ebenfalls ein Verschleiß einzelner Werkzeugelement festgestellt werden. Auch kann der zeitliche Verlauf der Verschleißprozesse bestimmt werden.

In der Praxis ist jedoch oft noch ein Kühl- oder Schmiermittel vorhanden, welches bewirkt, dass sich als Kontaktimpulse nicht die in Figur 9 gezeigten geraden Impulse ergeben sondern eher die in Figur 10 gezeigten Verläufe. In diesem Fall gäbe es einerseits die Möglichkeit die Leitfähigkeit des Kühlschmiermittels zu verändern. Eine andere Möglichkeit besteht darin, wie in Figur 10 gezeigt, einen unteren Spannungswert 19 und ein oberen Spannungswert 18 zu definieren und, sobald die Spannung von höheren Spannungswerten herkommend den oberen Spannungswert 18 unterschreitet bzw. von kleinen Spannungswerten herkommend den unteren Spannungswert 19 überschreitet dieses Ereignis festzustellen. Damit liegt der tatsächliche Kontakt in dem Bereich Δ X, in dem die jeweiligen Kurvenverläufe 28 die beiden Spannungsschwellen 18 und 19 passieren. Damit wird bei einem sicheren Kontakt über die Hysterese geschaltet.

Bei den in Figur 10 dargestellten Verläufen handelt es sich um fiktive Verläufe, die sich in der Realität dadurch ergeben, dass die Spannung wie oben ausgeführt nicht sprunghaft ansteigt, sondern durch das Schmier- oder Kühlmittel beeinflusst wird.

### Bezugszeichenliste

- 2: Halterung
- 3a,3b, 3c, 3d, 3e, 3f: Werkzeugelemente
- 4: Halteelement
- 5: Bezugskörper
- 6, 6a: Vorsprung
- 9: Spannungsmesseinrichtung
- 11: Vorspanneinrichtung
- 13: Schaltelement
- 14a, 14b, 14c, 14d, 14e, 14f,: Spannungspulse
- 18: oberer Spannungswert
- 19: unterer Spannungswert
- 22: Widerstand
- 23: Spannungsquelle
- 24: Spannungselement
- 25: Anzeigeeinrichtung
- 26: Leitung
- 27: Positionserfassungseinrichtung
- 28: Kurvenverlauf
- U1, U2, U3, U4, U5, U6: Spannungen
- X1, X2, X3, X4, X5, X6: örtliche Position

## Patentansprüche

1. Verfahren zur Prüfung von Eigenschaften wenigstens eines Werkzeugelements (3a, 3b, 3c, 3d, 3e, 3f) mit den Schritten:
- Bewegen des Werkzeugelements (3a, 3b, 3c, 3d, 3e, 3f) in Richtung eines Bezugskörpers (5) oder Bewegen des Bezugskörpers (5) in Richtung des Werkzeugelements (3a, 3b, 3c, 3d, 3e, 3f);
- Bestimmung einer örtlichen Position des Werkzeugelements (3a, 3b, 3c, 3d, 3e, 3f) gegenüber dem Bezugskörper (5) oder Bestimmung einer örtlichen Position des Bezugskörpers (5) gegenüber dem Werkzeugelement (3a, 3b, 3c, 3d, 3e, 3f);
- Ausgabe eines Signals, das für diejenige örtliche Position des Werkzeugelements
(3a, 3b, 3c, 3d, 3e, 3f) bzw. des Bezugskörpers (5) charakteristisch ist, bei der das Werkzeugelement (3a, 3b,3c, 3d, 3e, 3f) den Bezugskörper (5) bzw. der Bezugskörper (5) das Werkzeugelement (3a, 3b,3c, 3d, 3e, 3f) kontaktiert und ein zweites für das Werkzeugelement bzw. den Bezugskörper charakteristisches Signal ausgegeben wird, das zumindest das Ereignis des Auftreffens des Werkzeugselementes auf den Bezugskörper signalisiert,
wobei der Bezugskörper (5) ein zu bearbeitendes und/oder zu messendes Werkstück ist,
**dadurch gekennzeichnet, dass**
eine Vielzahl an Werkzeugelementen (3a, 3b, 3c, 3d, 3e, 3f) vorgesehen ist und die einzelnen Werkzeugelemente (3a, 3b, 3c, 3d, 3e, 3f) mit verschiedenen Spannung (U1, U2, U3, U4, U5, U6) gegenüber dem Werkstück beaufschlagt werden.

2. Verfahren nach wenigstens einem der vorangegangenen Ansprüche,
**dadurch gekennzeichnet, dass**
das zweite charakteristische Signal einen Spannungswert enthält.

3. Verfahren nach einem der vorangegangenen Ansprüche,
**dadurch gekennzeichnet, dass**
die Eigenschaften aus einer Gruppe von Eigenschaften ausgewählt sind, die die Länge des Werkzeugelements (3a, 3b, 3c, 3d, 3e, 3f), das Vorhandensein von Brüchen, das Vorhandensein von abnutzungsbedingten Verkürzungen und dergleichen enthält.

4. Verfahren nach einem der vorangegangenen Ansprüche,
**dadurch gekennzeichnet, dass**
eine Vielzahl von Werkzeugelementen vorgesehen ist.

5. Verfahren nach Anspruch 4,
**dadurch gekennzeichnet, dass**
jedes Werkzeugelement (3a, 3b, 3c, 3d, 3e, 3f) mit einer vorgegebenen Spannung (U1, U2, U3, U4, U5, U6) gegenüber dem Bezugskörper (5) beaufschlagt wird.

6. Verfahren nach wenigstens einem der Ansprüche 4 oder 5,
**dadurch gekennzeichnet, dass**
ein erstes Signal, welches für die örtliche Position, an der ein bestimmtes Werkzeugelement (3a, 3b, 3c, 3d, 3e, 3f) den Bezugskörper (5) kontaktiert, charakteristisch ist und ein zweites Signal, das für das bestimmte Werkzeugelement (3a, 3b, 3c, 3d, 3e, 3f) charakteristisch ist, ausgegeben wird.

7. Verfahren nach wenigstens einem der vorangegangenen Ansprüche,
**dadurch gekennzeichnet, dass**
in Abhängigkeit von dem ersten Signal eine Anweisung ausgegeben wird.

8. Vorrichtung zur Prüfung von Eigenschaften wenigstens eines Werkzeugelements (3a, 3b, 3c, 3d, 3e, 3f) mit einer Halterung (2), an der das Werkzeugelement angeordnet ist und einer Positionsmesseinrichtung, die die Position der Halterung (2) gegenüber einem Bezugskörper (5) in wenigstens einer Dimension bestimmt, eine Kontakterfassungseinrichtung (9, 11, 13), die das Auftreten eines Kontakts zwischen dem Werkzeugelement (3a, 3b, 3c, 3d, 3e, 3f) und dem Bezugskörper (5) erfasst und eine Ausgabeeinrichtung (25), die wenigstens die Position ausgibt, an der der Kontakt zwischen dem Werkzeugelement (3a, 3b, 3c, 3d, 3e, 3f) und dem Bezugskörper (5) auftritt und ein zweites für das Werkzeugelement bzw. den Bezugskörper charakteristisches Signal ausgibt, das zumindest das Ereignis des Auftreffens des Werkzeugelements auf dem Bezugskörper signalisiert, vorgesehen sind,
wobei der Bezugskörper (5) ein zu bearbeitendes und/oder zu messendes Werkstück ist,
**dadurch gekennzeichnet, dass**
eine Vielzahl an Werkzeugelementen (3a, 3b, 3c, 3d, 3e, 3f) vorgesehen ist und die kontakterfassungseinrichtung (9,11,13) eine Spannungsquelle (21) aufweist, durch die die einzelnen Werkzeugelemente (3a, 3b, 3c, 3d, 3e, 3f) mit verschiedenen Spannung (U1, U2, U3, U4, U5, U6) gegenüber dem Werkstück beaufschlagbar sind.

9. Vorrichtung nach Anspruch 8,
**dadurch gekennzeichnet, dass**
die Spannungsquelle (21) derart mit dem Werkzeugelement (3a, 3b, 3c, 3d, 3e, 3f) verbunden ist, dass bei Auftreten eines Kontakts zwischen dem Werkzeugelement (3a, 3b, 3c, 3d, 3e, 3f) und dem Bezugskörper (5) ein Stromkreis geschlossen wird.

10. Vorrichtung nach wenigstens einem der vorangegangene Ansprüche 8 - 9,
**dadurch gekennzeichnet, dass**
die Kontakterfassungseinrichtung ein Schaltelement (13) aufweist, das bei Auftreten eines Kontakts zwischen dem Werkzeugelement (3a, 3b, 3c, 3d, 3e, 3f) und dem Bezugskörper (5) von einem Schaltzustand in einen anderen Schaltzustand übergeht.

11. Vorrichtung nach wenigstens einem der vorangegangenen Ansprüche 8 - 10,
**dadurch gekennzeichnet, dass**
die Kontakterfassungseinrichtung (9, 11,13) eine Vorspanneinrichtung (11) aufweist.

12. Vorrichtung nach wenigstens einem der vorangegangenen Ansprüche 8 - 11,
**dadurch gekennzeichnet, dass**
an der Halterung (2) eine Vielzahl von Werkzeugelementen (3a, 3b, 3c, 3d, 3e, 3f) angeordnet ist und bevorzugt die Kontakterfassungseinrichtung (9, 11, 13) den Kontakt jedes Werkzeugelements (3a, 3b, 3c, 3d, 3e, 3f) mit dem Bezugskörper (5) erfasst.

13. Vorrichtung nach wenigstens einem der vorangegangenen Ansprüche 8 - 12,
**dadurch gekennzeichnet, dass**
der Bezugskörper elektrisch isoliert ist.

## Claims

1. Method for testing properties of at least one tool element (3a, 3b, 3c, 3d, 3e, 3f), comprising the steps:
- moving the tool element (3a, 3b, 3c, 3d, 3e, 3f) in the direction of a reference body (5) or moving the reference body (5) in the direction of the tool element (3a, 3b, 3c, 3d, 3e, 3f);
- determining a local position of the tool element (3a, 3b, 3c, 3d, 3e, 3f) relative to the reference body (5) or determining a local position of the reference body (5) relative to the tool element (3a, 3b, 3c, 3d, 3e, 3f);
- outputting a signal which is characteristic of that local position of the tool element (3a, 3b, 3c, 3d, 3e, 3f) or of the reference body (5) in which the tool element (3a, 3b, 3c, 3d, 3e, 3f) makes contact with the reference body (5) or the reference body (5) makes contact with the tool element (3a, 3b, 3c, 3d, 3e, 3f), and a second signal is output which is characteristic of the tool element or of the reference body and which, when the tool element strikes the reference body, signals at least this event,
wherein the reference body (5) is a workpiece to be machined and/or measured,
**characterized in that**
a multiplicity of tool elements (3a, 3b, 3c, 3d, 3e, 3f) are provided and different voltages (U1, U2, U3, U4, U5, U6) are applied to the individual tool elements (3a, 3b, 3c, 3d, 3e, 3f) relative to the workpiece.

2. Method according to Claim 1, **characterized in that** the second characteristic signal contains, a voltage value.

3. Method according to either of the preceding claims, **characterized in that** the properties are selected from a group of properties which contains the length of the tool element (3a, 3b, 3c, 3d, 3e, 3,f), the presence of fractures, the presence of wear-related shortenings and the like.

4. Method according to one of the preceding claims, **characterized in that** a multiplicity of tool elements are provided.

5. Method according to Claim 4, **characterized in that** a predetermined voltage (U1, U2, U3, U4, U5, U6) is applied to each tool element (3a, 3b, 3c, 3d, 3e, 3f) relative to the reference body (5).

6. Method according to at least one of Claims 4 or 5, **characterized in that** a first signal which is characteristic of the local position at which a specific tool element (3a, 3b, 3c, 3d, 3e, 3f) makes contact with the reference body (5) and a second signal which is characteristic of the specific tool element (3a, 3b, 3c, 3d, 3e, 3f) are output.

7. Method according to at least one of the preceding claims, **characterized in that** an instruction is output as a function of the first signal.

8. Device for testing the properties of at least one tool element (3a, 3b, 3c, 3d, 3e, 3f), comprising a mounting (2) on which the tool element is arranged and a position measuring means which determines the position of the mounting (2) relative to the reference body (5) in at least one dimension, a contact detecting means (9, 11, 13) which detects the occurrence of contact between the tool element (3a, 3b, 3c, 3d, 3e, 3f) and the reference body (5), and an output means (25) which outputs at least the position in which the contact between the tool element (3a, 3b, 3c, 3d, 3e, 3f) and the reference body (5) occurs and outputs a second signal which is characteristic of the tool element or of the reference body and which, when the tool element strikes the reference body, signals at least this event,
wherein the reference body, (5) is a workpiece to be machined and/or measured,
**characterized in that**
a multiplicity of tool elements (3a, 3b, 3c, 3d, 3e, 3f) are provided and the contact detecting means (9, 11, 13) has a voltage source (21), by means of which different voltages (U1, U2, U3, U4, U5, U6) are applied to the individual tool elements (3a, 3b, 3c, 3d, 3e, 3f) relative to the workpiece.

9. Device according to Claim 8, **characterized in that** the voltage source (21) is connected to the tool element (3a, 3b, 3c, 3d, 3e, 3f) in such a way that an electric circuit is closed when contact occurs between the tool element (3a, 3b, 3c, 3d, 3e, 3f) and the reference body (5).

10. Device according to at least one of the preceding Claims 8 to 9, **characterized in that** the contact detecting means has a switching element (13) which changes from one switching state into another switching state when contact occurs between the tool element (3a, 3b, 3c, 3d, 3e, 3f) and the reference body (5).

11. Device according to at least one of the preceding Claims 8 to 10, **characterized in that** the contact detecting means (9, 11, 13) has a preloading means (11).

12. Device according to at least one of the preceding Claims 8 to 11, **characterized in that** a multiplicity of tool elements (3a, 3b, 3c, 3d, 3e, 3f) are arranged on the mounting (2), and the contact detecting means (9, 11, 13) preferably detects the contact between each tool element (3a, 3b, 3c, 3d, 3e, 3f) and the reference body (5).

13. Device according to at least one of the preceding Claims 8 to 12, **characterized in that** the reference body is electrically isolated.

## Revendications

1. Procédé pour contrôler les caractéristiques d'au moins un élément d'outil (3a, 3b, 3c, 3d, 3e, 3f), comprenant les étapes suivantes :
- déplacer l'élément d'outil (3a, 3b, 3c, 3d, 3e, 3f) dans la direction d'un corps de référence (5) ou déplacer le corps de référence (5) dans la direction de l'élément d'outil (3a, 3b, 3c, 3d, 3e, 3f) ;
- déterminer une position locale de l'élément d'outil (3a, 3b, 3c, 3d, 3e, 3f) par rapport au corps de référence (5) ou déterminer une position locale du corps de référence (5) par rapport à l'élément d'outil (3a, 3b, 3c, 3d, 3e, 3f) ;
- émettre un signal qui est caractéristique de la position locale respective de l'élément d'outil (3a, 3b, 3c, 3d, 3e, 3f) ou du corps de référence (5), à laquelle l'élément d'outil (3a, 3b, 3c, 3d, 3e, 3f) vient en contact avec le corps de référence (5) ou le corps de référence (5) vient en contact avec l'élément d'outil (3a, 3b, 3c, 3d, 3e, 3f), et un deuxième signal caractéristique est émis pour l'élément d'outil ou le corps de référence, lequel signale au moins le contact réalisé de l'élément d'outil avec le corps de référence,
le corps de référence (5) étant une pièce à usiner et/ou à mesurer,
**caractérisé en ce que**
l'on prévoit une pluralité d'éléments d'outil (3a, 3b, 3c, 3d, 3e, 3f) et les éléments d'outil (3a, 3b, 3c, 3d, 3e, 3f) individuels sont sollicités avec une tension différente (U1, U2, U3, U4, U5, U6) par rapport à la pièce.

2. Procédé selon la revendication 1,
**caractérisé en ce que**
le deuxième signal caractéristique contient une valeur de tension.

3. Procédé selon l'une quelconque des revendications précédentes,
**caractérisé en ce que**
les propriétés sont choisies à partir d'un groupe de propriétés qui contient la longueur de l'élément d'outil (3a, 3b, 3c, 3d, 3e, 3f), la présence de cassures, la présence de raccourcissements causés par l'usure, et similaires.

4. Procédé selon l'une quelconque des revendications précédentes,
**caractérisé en ce**
**qu'**une pluralité d'éléments d'outil est prévue.

5. Procédé selon la revendication 4,
**caractérisé en ce que**
chaque élément d'outil (3a, 3b, 3c, 3d, 3e, 3f) est sollicité avec une tension prédéfinie (U1, U2, U3, U4, U5, U6) par rapport au corps de référence (5).

6. Procédé selon au moins l'une quelconque des revendications 4 ou 5,
**caractérisé en ce**
**qu'**un premier signal, qui est caractéristique d'une position locale à laquelle un élément d'outil (3a, 3b, 3c, 3d, 3e, 3f) déterminé vient en contact avec le corps de référence (5), et un deuxième signal qui est caractéristique de l'élément d'outil (3a, 3b, 3c, 3d, 3e, 3f) déterminé, sont émis.

7. Procédé selon au moins l'une quelconque des revendications précédentes,
**caractérisé en ce**
**qu'**une indication est émise en fonction du premier signal.

8. Dispositif pour contrôler les caractéristiques d'au moins un élément d'outil (3a, 3b, 3c, 3d, 3e, 3f), comprenant une fixation (2), sur laquelle est disposé l'élément d'outil, et l'on prévoit un dispositif de mesure de position, qui détermine la position de la fixation (2) par rapport à un corps de référence (5) dans au moins une dimension, un dispositif de détection de contact (9, 11, 13), qui détecte l'apparition d'un contact entre l'élément d'outil (3a, 3b, 3c, 3d, 3e, 3f) et le corps de référence (5), et un dispositif d'émission (25) qui émet au moins la position à laquelle le contact entre l'élément d'outil (3a, 3b, 3c, 3d, 3e, 3f) et le corps de référence (5) a lieu, et émet un deuxième signal caractéristique de l'élément d'outil ou du corps de référence, qui signale au moins le contact réalisé de l'élément d'outil avec le corps de référence,
le corps de référence (5) étant une pièce à usiner et/ou à mesurer,
**caractérisé en ce**
**qu'**il est prévu une pluralité d'éléments d'outil (3a, 3b, 3c, 3d, 3e, 3f) et le dispositif de détection de contact (9, 11, 13) présente une source de tension (21), par laquelle les éléments d'outil (3a, 3b, 3c, 3d, 3e, 3f) peuvent être sollicités avec une tension différente (U1, U2, U3, U4, U5, U6) par rapport à la pièce.

9. Dispositif selon la revendication 8,
**caractérisé en ce que**
la source de tension (21) est connectée à l'élément d'outil (3a, 3b, 3c, 3d, 3è, 3f) de telle sorte que lors de l'apparition d'un contact entre l'élément d'outil (3a, 3b, 3c, 3d, 3e, 3f) et le corps de référence (5), un circuit électrique est fermé.

10. Dispositif selon au moins l'une quelconque des revendications 8 à 9,
**caractérisé en ce que**
le dispositif de détection de contact présente un élément de commutation (13) qui passe d'un état de commutation à un autre état de commutation lors de l'apparition d'un contact entre l'élément d'outil (3a, 3b, 3c, 3d, 3e, 3f) et le corps de référence (5).

11. Dispositif selon au moins l'une quelconque des revendications précédentes 8 à 10,
**caractérisé en ce que**
le dispositif de détection de contact (9, 11, 13) présente un dispositif de précontrainte (11).

12. Dispositif selon au moins l'une quelconque des revendications précédentes 8 à 11,
**caractérisé en ce que**
l'on dispose sur la fixation (2) une pluralité d'éléments d'outil (3a, 3b, 3c, 3d, 3e, 3f) et de préférence le dispositif de détection de contact (9, 11, 13) détecte le contact de chaque élément d'outil (3a, 3b, 3c, 3d, 3e, 3f) avec le corps de référence (5).

13. Dispositif selon au moins l'une quelconque des revendications précédentes 8 à 12,
**caractérisé en ce que**
le corps de référence est isolé électriquement.
